# FASCICULE DE BREVET EUROPEEN

(11) **EP 4 252 182 B1**
(45) Date de publication et mention de la délivrance du brevet: **11.11.2026**
(21) Numéro de dépôt: 21823641.2
(22) Date de dépôt: 22.11.2021
(51) Int. Cl.: G06V 20/00, G06V 10/82, G06N 3/08, G06N 3/045, G06N 3/0464, G06N 3/09

(54) **PROCÉDÉ DE RECHERCHE AUTOMATIQUE D'AU MOINS UN MOTIF TEXTILE DANS UN RENFORT DE MATÉRIAU COMPOSITE**
VERFAHREN ZUR AUTOMATISCHEN SUCHE NACH MINDESTENS EINEM TEXTILEN MUSTER IN EINER VERBUNDWERKSTOFFVERSTÄRKUNG
METHOD FOR AUTOMATICALLY SEARCHING FOR AT LEAST ONE TEXTILE PATTERN IN A COMPOSITE MATERIAL REINFORCEMENT

(30) Priorité: 30.11.2020 FR 2012365
(43) Date de publication de la demande: 04.10.2023
(73) Titulaire: SAFRAN AIRCRAFT ENGINES, 75015 Paris (FR)
(72) Inventeur: WIELHORSKI, Yanneck, 77550 MOISSY-CRAMAYEL (FR); FIXY, Teddy, 77550 MOISSY-CRAMAYEL (FR); SCHNEIDER, Julien Paul, 77550 MOISSY-CRAMAYEL (FR)
(74) Mandataire: Cabinet Camus Lebkiri
(86) Numéro de dépôt international: PCT/FR2021/052056
(87) Numéro de publication internationale: WO 2022/112697

(56) Documents cités:
- ALI MUHAMMAD A ET AL: "Deep learning based semantic segmentation of CT images for creating digital material twins of fibrous reinforcements", COMPOSITES PART A: APPLIED SCIENCE AND MANUFACTURING, ELSEVIER, AMSTERDAM, NL, vol. 139, 28 September 2020 (2020-09-28), XP086315457, ISSN: 1359-835X, [retrieved on 20200928], DOI: 10.1016/J.COMPOSITESA.2020.106131
- BADRAN ALY ET AL: "Automated segmentation of computed tomography images of fiber-reinforced composites by deep learning", JOURNAL OF MATERIAL SCIENCE, KLUWER ACADEMIC PUBLISHERS, DORDRECHT, vol. 55, no. 34, 8 September 2020 (2020-09-08), pages 16273 - 16289, XP037244938, ISSN: 0022-2461, [retrieved on 20200908], DOI: 10.1007/S10853-020-05148-7

## Description

### DOMAINE TECHNIQUE DE L'INVENTION

Le domaine technique de l'invention est celui des matériaux composites et plus particulièrement celui des procédés de recherche automatique de motifs textiles de renfort de matériaux composites.

La présente invention concerne un procédé de recherche d'au moins un motif textile dans un renfort de matériau composite et en particulier un procédé automatique de recherche d'au moins un motif textile dans un renfort de matériau composite. La présente invention concerne également un procédé de reconstitution de la géométrie textile d'un renfort de matériau composite, un procédé de contrôle de la géométrie textile d'un renfort de matériau composite, un produit-programme d'ordinateur et un support d'enregistrement permettant de mettre en œuvre le procédé de recherche et/ou le procédé de reconstitution et/ou le procédé de contrôle.

### ARRIERE-PLAN TECHNOLOGIQUE DE L'INVENTION

Un matériau composite est un assemblage comportant au moins une ossature textile appelée renfort et un liant appelé matrice. La fabrication d'une pièce dans un matériau composite nécessite donc une première étape de confection du renfort, par exemple par tissage, puis une deuxième étape d'assemblage avec la matrice, par exemple par injection.

Le renfort d'une pièce est confectionné de manière que la géométrie textile du renfort soit conforme à une géométrie textile de renfort théorique permettant à la pièce d'avoir les propriétés thermo-physiques et/ou thermomécaniques souhaitées. Cependant, il est courant que des écarts soient constatés entre la géométrie de renfort réelle de la pièce et la géométrie de renfort théorique. Ces écarts, appelés défauts textiles, ont souvent pour conséquence une variation des propriétés thermo-physiques et/ou thermomécaniques de la pièce par rapport à ce qui a été prévu, et entraînent donc le rejet systématique de la pièce, considérée comme défectueuse.

Actuellement, l'identification des défauts textiles est réalisée par contrôle visuel, ce qui rend l'opération extrêmement chronophage, une simple aube LEAP^{™} comportant plusieurs milliers de fils de carbone à contrôler, et sujette à de nombreuses erreurs, car il est parfois impossible, même à l'œil nu, de distinguer des défauts textiles.

Il existe donc un besoin de pouvoir contrôler la conformité de la géométrie textile du renfort d'une pièce avec la géométrie textile théorique, avec un risque réduit d'erreurs.

Les documents pertinents de l'état de la technique antérieure sont:
- ALI MUHAMMAD A ET AL: "Deep learning based semantic segmentation of CT images for creating digital material twins of fibrous reinforcements",COMPOSITES PART A: APPLIED SCIENCE AND MANUFACTURING, ELSEVIER, AMSTERDAM, NL, vol. 139, 28 septembre 2020 (2020-09-28), ISSN: 1359-835X, DOI: 10.1016/J.COMPOSITESA.2020.106131, et
- BADRAN ALY ET AL: "Automated segmentation of computed tomography images of fiber-reinforced composites by deep learning",JOURNAL OF MATERIAL SCIENCE, KLUWER ACADEMIC PUBLISHERS, DORDRECHT, vol. 55, no. 34, 8 septembre 2020 (2020-09-08), pages 16273-16289, ISSN: 0022-2461, DOI: 10.1007/S10853-020-05148-7.

### RESUME DE L'INVENTION

L'invention est définie par les revendications annexées.

L'invention offre une solution aux problèmes évoqués précédemment, en permettant de détecter de manière précise, les éventuels défauts textiles du renfort d'une pièce.

Un premier aspect de l'invention concerne un procédé de recherche automatique d'au moins un motif textile donné dans un renfort de matériau composite comportant une pluralité de motifs textiles, chaque motif textile comportant une pluralité de fils de renfort agencés selon une topologie textile, le procédé comportant les étapes suivantes :
- Acquisition d'une image tri-dimensionnelle du renfort de matériau composite ;
- Recherche, à l'aide d'un réseau de neurones artificiels entraîné sur une base de données d'entraînement pour détecter le motif textile donné dans une image tri-dimensionnelle de renfort de matériau composite, du motif textile donné dans l'image tri-dimensionnelle acquise.

Grâce à l'invention, le réseau de neurones artificiels permet de détecter automatiquement chaque motif textile rencontré pendant sa phase d'entraînement, présent dans l'image tri-dimensionnelle acquise.

Si le motif textile est un défaut textile connu, le réseau de neurones artificiels permet de détecter automatiquement les occurrences de ce défaut textile dans le renfort d'un matériau composite.

Si le motif textile est un motif textile présent dans la géométrie textile théorique, le réseau de neurones artificiels permet de détecter les occurrences de ce motif textile dans le renfort d'un matériau composite. Ainsi, en comparant la position de chaque occurrence du motif textile avec la position correspondante dans la géométrie textile théorique, il est possible de vérifier la conformité de la géométrie textile du renfort avec la géométrie textile théorique correspondante et d'identifier d'éventuels défauts textiles et leurs positions. Cette comparaison peut être réalisée manuellement ou automatiquement.

Le procédé de recherche selon l'invention permet donc de détecter les éventuels défauts textiles de manière précise par rapport à une méthode de contrôle visuel.

Outre les caractéristiques qui viennent d'être évoquées dans le paragraphe précédent, le procédé selon le premier aspect de l'invention peut présenter une ou plusieurs caractéristiques complémentaires parmi les suivantes, considérées individuellement ou selon toutes les combinaisons techniquement possibles.

Selon une variante de réalisation, le réseau de neurones artificiels est un perceptron multi-couches ou un réseau de neurones artificiels convolutif.

Selon une variante de réalisation compatible avec la variante de réalisation précédente, le réseau de neurones artificiels est entraîné de manière supervisée et la base de données d'entraînement comporte pour chaque matériau composite d'entraînement d'une pluralité de matériaux composites d'entraînement, une image tri-dimensionnelle du renfort du matériau composite d'entraînement, et pour chaque motif textile à détecter, la topologie textile du motif textile et la localisation du motif textile dans l'image tri-dimensionnelle.

Ainsi, le réseau de neurones artificiels est entraîné à détecter dans une image tri-dimensionnelle, la topologie textile associée à chaque motif textile à détecter.

Selon une sous-variante de réalisation de la variante de réalisation précédente, la topologie textile de chaque motif textile à détecter est obtenue manuellement, à l'aide d'algorithmes de morphologie mathématique, d'un réseau de neurones artificiels ou d'un logiciel dédié.

Selon une variante de réalisation compatible avec les variantes de réalisation précédentes, l'image tri-dimensionnelle est acquise par tomographie par rayons X ou par microscope électronique en transmission.

Un deuxième aspect de l'invention concerne un procédé de reconstitution automatique de la géométrie textile d'un renfort de matériau composite comportant une pluralité de motifs textiles, comportant les étapes du procédé de recherche selon le premier aspect de l'invention pour chaque motif textile du renfort de matériau composite.

Ainsi, il est possible d'obtenir automatiquement une reconstitution complète de l'architecture du renfort du matériau composite dans laquelle chaque point du renfort a été associé à un motif textile connu.

Un troisième aspect de l'invention concerne un procédé de contrôle automatique de la géométrie textile d'un renfort de matériau composite, comportant les étapes du procédé de reconstitution selon le deuxième aspect de l'invention pour obtenir une reconstitution de la géométrie textile du renfort de matériau composite et une étape de comparaison entre la reconstitution de la géométrie textile du renfort de matériau composite et une géométrie textile théorique.

Ainsi, il est possible d'obtenir automatiquement tous les écarts entre la géométrie textile reconstruite et la géométrie textile théorique, et donc les éventuels défauts textiles du renfort du matériau composite.

Un quatrième aspect de l'invention concerne un calculateur configuré pour mettre en œuvre les étapes du procédé de recherche selon le premier aspect de l'invention et/ou du procédé de reconstitution selon le deuxième aspect de l'invention et/ou du procédé de contrôle selon le troisième aspect de l'invention.

Un cinquième aspect de l'invention concerne un produit-programme d'ordinateur comprenant des instructions qui, lorsque le programme est exécuté par un ordinateur, conduisent celui-ci à mettre en œuvre les étapes du procédé de recherche selon le premier aspect de l'invention et/ou du procédé de reconstitution selon le deuxième aspect de l'invention et/ou du procédé de contrôle selon le troisième aspect de l'invention.

Un sixième aspect de l'invention concerne un support d'enregistrement lisible par ordinateur comprenant des instructions qui, lorsqu'elles sont exécutées par un ordinateur, conduisent celui-ci à mettre en œuvre les étapes du procédé de recherche selon le premier aspect de l'invention et/ou du procédé de reconstitution selon le deuxième aspect de l'invention et/ou du procédé de contrôle selon le troisième aspect de l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre une image tri-dimensionnelle d'un renfort de matériau composite.
- La figure 2 montre une reconstitution numérique de l'architecture d'un renfort de matériau composite sur laquelle est identifié un motif textile.
- La figure 3 montre une représentation schématique d'un fil de renfort sur lequel est identifié le squelette du fil de renfort.
- La figure 4 est un schéma synoptique illustrant l'enchaînement des étapes d'un procédé de recherche selon l'invention.
- La figure 5 est un schéma synoptique illustrant l'enchaînement des étapes d'un procédé de reconstitution selon l'invention.
- La figure 6 est un schéma synoptique illustrant l'enchaînement des étapes d'un procédé de contrôle selon l'invention.

### DESCRIPTION DETAILLEE

Sauf précision contraire, un même élément apparaissant sur des figures différentes présente une référence unique.

Un premier aspect de l'invention concerne un procédé de recherche automatique d'au moins un motif textile dans un renfort de matériau composite.

Le renfort d'un matériau composite est une ossature textile comportant une pluralité de fils de renfort, encore appelés mèches ou torons.

Les fils de renfort sont agencés selon au moins un axe, appelé axe de renfort.

Le renfort est par exemple une superposition de plis de renfort, ou couches de renfort, comprenant chacun une pluralité de fils de renfort.

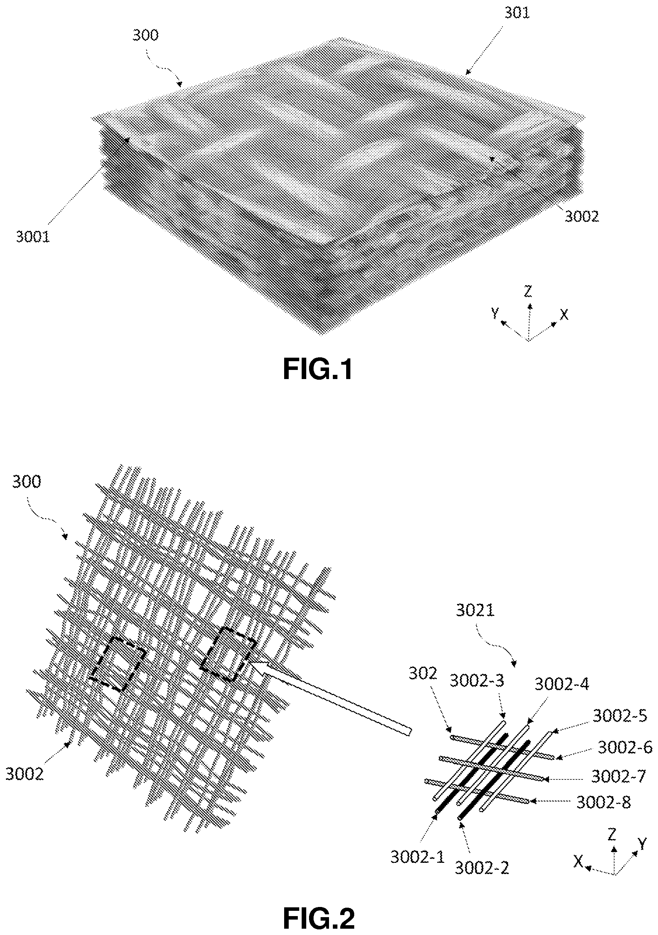

[Fig. 1] La figure 1 montre une image tri-dimensionnelle 301 du renfort 300 d'un matériau composite.

Sur la figure 1, le pli de renfort 3001 supérieur est constitué de fils de renfort 3002 agencés selon un axe Y et de fils de renfort 3002 agencés selon un axe X.

Sur la figure 1, les axes de renfort X et Y sont sensiblement perpendiculaires mais les plis de renfort 3001 peuvent comporter des fils de renfort 3002 agencés selon des axes de renfort formant un angle différent de 90°. Par exemple, les axes de renfort X, Y peuvent former un angle de 45°.

Dans le renfort 300 d'un matériau composite, les fils de renfort 3002 sont agencés entre eux de manière à former une géométrie textile particulière comportant une pluralité de motifs textiles.

[Fig. 2] La figure 2 montre une reconstitution numérique de l'architecture du renfort 300 d'un matériau composite sur laquelle sont identifiées deux occurrences d'un motif textile 3021 présentant une topologie textile 302.

On entend par « motif textile d'un renfort », un agencement géométrique d'une pluralité de fils de renfort pouvant se répéter dans le renfort.

Un même motif textile 3021 peut donc présenter plusieurs occurrences dans le renfort 300 d'un matériau composite.

Sur la figure 2, le motif textile 3021 comporte huit fils de renfort 3002, deux fils de renfort 3002-1, 3002-2 représentés en noir agencés selon l'axe de renfort Y, trois fils de renfort 3002-3, 3002-4, 3002-5 représentés en blanc et agencés selon l'axe de renfort Y et trois fils de renfort 3002-6, 3002-7, 3002-8 représentés en gris et agencés selon l'axe de renfort X. Le fil de renfort 3002-3 est superposé au fil de renfort 3002-1 et le fil de renfort 3002-4 est superposé au fil de renfort 3002-2 selon l'axe Z.

Selon l'axe Z, les fils de renfort 3002-6, 3002-8 sont en dessous des fils de renfort 3002-2, 3002-3, 3002-4, 3002-5 et au-dessus du fil de renfort 3002-1 et le fil de renfort 3002-7 est au-dessus des fils de renfort 3002-1, 3002-2, 3002-3, 3002-4, 3002-5.

Sur la figure 2, l'architecture du renfort 300 de matériau composite comporte deux occurrences du motif textile 3021 identifiées par des pointillés.

Au sein d'un motif textile 3021, chaque fil de renfort 3002 est agencé selon une topologie textile 302 correspondant au squelette de chaque fil de renfort 3002 du motif textile 3021.

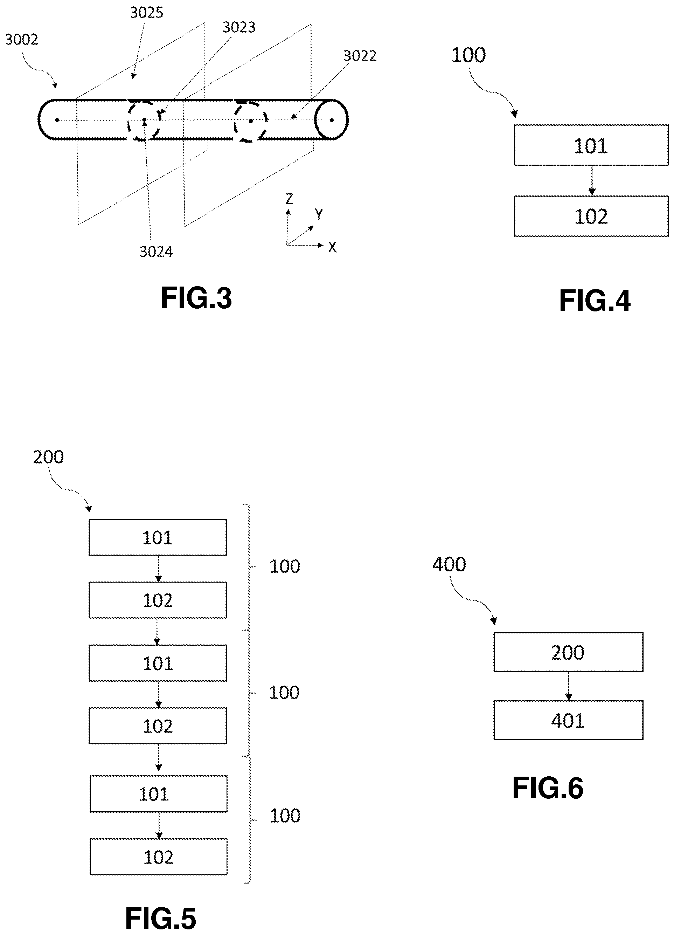

[Fig. 3] La figure 3 montre une représentation schématique d'un fil de renfort 3002 présentant un squelette 3022.

Comme représenté sur la figure 3, le squelette 3022 d'un fil de renfort 3002 agencé selon un axe de renfort X comporte un ensemble de points incluant pour chaque section 3023 du fil de renfort 3002 selon un plan 3025 perpendiculaire à l'axe de renfort X d'une pluralité de sections 3023 du fil de renfort 3002 selon un plan 3025 perpendiculaire à l'axe de renfort X, un point correspondant au barycentre 3024 de la section 3023 du fil de renfort 3002, chaque plan 3025 étant parallèle et non confondu avec les autres plans 3025.

Le squelette 3022 d'un fil de renfort 3002 peut être discret, ou continu. Dans ce dernier cas, le squelette 3022 correspond à une interpolation passant par tous les points de l'ensemble de points.

Un motif textile 3021 peut par exemple être fabriqué par tressage, couture, épinglage z (ou z-pinning en anglais), ou encore touffetage (ou tufting en anglais).

Un motif textile 3021 peut correspondre à un défaut textile particulier.

Le procédé selon le premier aspect de l'invention permet d'obtenir, pour chaque motif textile 3021 à rechercher, le nombre de motifs textiles 3021 détectés et leur localisation ou position, dans le renfort 300 du matériau composite.

[Fig. 4] La figure 4 est un schéma synoptique illustrant l'enchaînement des étapes du procédé 100 de recherche selon l'invention.

Une première étape 101 du procédé 100 consiste à acquérir une image tri-dimensionnelle 301 du renfort 300 du matériau composite.

L'image tri-dimensionnelle 301 est par exemple acquise par tomographie par rayons X ou par microscope électronique en transmission avec une résolution par exemple comprise entre de 1 à 400 µm de préférence de 10 à 200 µm.

Sur la figure 4, l'image tri-dimensionnelle 301 du renfort 300 d'un matériau composite est acquise par tomographie par rayons X.

Une deuxième étape 102 du procédé 100 consiste à utiliser un réseau de neurones artificiels entraîné sur une base de données d'entraînement, pour détecter chaque motif textile 3021 à rechercher présent dans l'image tri-dimensionnelle 301 acquise à la première étape 101.

Un réseau de neurones artificiels comporte au moins une couche de neurones artificiels comportant chacune au moins un neurone artificiel. Les neurones artificiels du réseau de neurones artificiels sont reliés entre eux par des synapses et à chaque synapse est affecté un coefficient synaptique.

Le réseau de neurones artificiels est par exemple un perceptron multi-couches ou un réseau de neurones artificiels convolutif, tel que le réseau de neurones artificiels U-net, et en particulier les réseaux de neurones artificiels U-net 2D ou U-net 3D.

L'entraînement permet d'entraîner le réseau de neurones artificiels à une tâche prédéfinie, en mettant à jour les coefficients synaptiques de manière à minimiser l'erreur entre la donnée de sortie fournie par le réseau de neurones artificiels et la vraie donnée de sortie, c'est-à-dire ce que le réseau de neurones artificiels devrait fournir en sortie pour remplir la tâche prédéfinie sur une certaine donnée d'entrée.

L'entraînement du réseau de neurones artificiels est par exemple supervisé. Dans ce cas, la base de données d'entraînement comporte des données d'entrée, chacune associée à une vraie donnée de sortie.

Le réseau de neurones artificiels a pour fonction de détecter chaque motif textile 3021 à détecter présent dans l'image tri-dimensionnelle 301 précédemment acquise.

La base de données d'entraînement comporte donc des images tri-dimensionnelles 301 d'une pluralité de matériaux composites d'entraînement, ainsi que des données sur la topologie textile 302 et la position de chaque motif textile 3021 à détecter dans chaque image tridimensionnelle 301 de la base de données d'entraînement.

Les données comportent par exemple les coordonnées tri-dimensionnelles de chaque point de l'ensemble de points inclus dans le squelette 3022 de chaque fil de renfort 3002 du motif textile 3021.

La topologie textile 302 d'un motif textile 3021 est par exemple obtenue manuellement, à l'aide d'algorithmes de morphologie mathématique, d'un réseau de neurones artificiels ou d'un logiciel dédié, tel qu'un logiciel de modélisation textile, comme TexGen, WiseTex, ou Multifil, ou un logiciel de génération aléatoire de géométrie textile.

Le ou les matériaux composites d'entraînement peuvent être identiques ou différents du matériau composite dans le renfort 300 duquel on veut rechercher au moins un motif textile 3021 du renfort 300.

Grâce au procédé 100 de recherche selon l'invention, il est possible de détecter chaque occurrence d'au moins un motif textile 3021 dans le renfort 300 d'un matériau composite avant assemblage avec la matrice ou après assemblage avec la matrice du matériau composite.

Les images tri-dimensionnelles 301 de la base de données d'entraînement peuvent donc être des images tri-dimensionnelles 301 de renforts 300 de matériaux composites avant assemblage avec leurs matrices et/ou des images tri-dimensionnelles 301 de renforts 300 de matériaux composites après assemblage avec leurs matrices.

Un deuxième aspect de l'invention concerne un procédé de reconstitution automatique de la géométrie textile du renfort 300 de matériau composite.

[Fig. 5] La figure 5 est un schéma synoptique illustrant l'enchaînement des étapes du procédé 200 de reconstitution selon l'invention.

On entend par « reconstitution de la géométrie textile du renfort d'un matériau composite », l'obtention d'un modèle numérique de l'architecture du renfort du matériau composite dans laquelle chaque motif textile a été identifié.

Le procédé 200 de reconstitution selon l'invention comporte les étapes 101, 102 du procédé 100 de recherche selon l'invention pour chaque motif textile 3021 du renfort 300 de matériau composite.

Sur la figure 5, le procédé 200 comporte trois fois les étapes 101, 102 du procédé 100.

Un troisième aspect de l'invention concerne un procédé de contrôle automatique de la géométrie textile du renfort 300 de matériau composite.

[Fig. 6] La figure 6 est un schéma synoptique illustrant l'enchaînement des étapes du procédé 400 de contrôle selon l'invention.

Le procédé 400 de contrôle selon l'invention comporte les étapes du procédé 200 de reconstitution selon l'invention permettant d'obtenir une reconstitution de la géométrie textile du renfort 300 de matériau composite.

Le procédé 400 de contrôle selon l'invention comporte ensuite une étape 401 de comparaison entre la reconstitution de la géométrie textile du renfort 300 de matériau composite obtenue précédemment et une géométrie textile théorique.

Par « géométrie textile théorique », on entend le modèle ou patron sur la base duquel le renfort 300 de matériau composite est confectionné et auquel le renfort 300 de matériau composite doit être conforme.

L'étape 401 de comparaison entre la reconstitution de la géométrie textile du renfort 300 de matériau composite obtenue précédemment et la géométrie textile théorique permet donc de tester la conformité du renfort 300 de matériau composite et de détecter d'éventuels défauts textiles.

Le procédé 100 de recherche, le procédé 200 de reconstitution et le procédé 400 de contrôle sont automatiques, c'est-à-dire qu'ils sont mis en œuvre par un calculateur.

## Revendications

1. Procédé (400) de contrôle automatique d'une géométrie textile d'un renfort (300) de matériau composite comportant une pluralité de motifs textiles (3021), chaque motif textile (3021) comportant une pluralité de fils de renfort (3002) agencés selon une topologie textile (302), le procédé (400) comprenant une étape d'acquisition d'une image tri-dimensionnelle (301) du renfort (300) de matériau composite (101) et les étapes suivantes :
- reconstitution de la géométrie textile du renfort (300) de matériau composite comprenant une recherche pour chaque motif textile (3021) du renfort (300) de matériau composite, à l'aide d'un réseau de neurones artificiels entraîné, de manière supervisée, sur une base de données d'entraînement pour détecter le motif textile donné dans une image tri-dimensionnelle de renfort de matériau composite, du motif textile (3021) donné dans l'image tri-dimensionnelle (301) acquise (102), la base de données d'entraînement comportant pour chaque matériau composite d'entraînement d'une pluralité de matériaux composites d'entraînement, une image tri-dimensionnelle (301) du renfort (300) du matériau composite d'entraînement, et pour chaque motif textile (3021) à détecter, la topologie textile (302) du motif textile (3021) et la localisation du motif textile (3021) dans l'image tri-dimensionnelle (301), la recherche permettant d'obtenir un nombre de détections de chaque motif textile (3021), la topologie textile et une localisation de chaque détection dans le renfort (300) de matériau composite,
- comparaison (401) entre la reconstitution de la géométrie textile du renfort (300) de matériau composite et une géométrie textile théorique.

2. Procédé (400) selon la revendication 1, **caractérisé en ce que** le réseau de neurones artificiels est un perceptron multi-couches ou un réseau de neurones artificiels convolutif.

3. Procédé (400) selon l'une quelconque des revendications précédentes, **caractérisé en ce que** l'image tri-dimensionnelle (301) est acquise par tomographie par rayons X ou par microscope électronique en transmission.

4. Procédé (400) selon l'une quelconque des revendications précédentes, **caractérisé en ce que** la topologie textile (302) de chaque motif textile (3021) à détecter est obtenue manuellement, à l'aide d'algorithmes de morphologie mathématique, d'un réseau de neurones artificiels ou d'un logiciel dédié.

5. Calculateur configuré pour mettre en œuvre les étapes du procédé (400) du procédé (400) de contrôle selon l'une quelconque des revendications précédentes.

6. Produit-programme d'ordinateur comprenant des instructions qui, lorsque le programme est exécuté par un ordinateur, conduisent celui-ci à mettre en œuvre les étapes du procédé (400) de contrôle selon l'une quelconque des revendications 1 à 4.

7. Support d'enregistrement lisible par ordinateur comprenant des instructions qui, lorsqu'elles sont exécutées par un ordinateur, conduisent celui-ci à mettre en œuvre les étapes du procédé (400) de contrôle selon l'une quelconque des revendications 1 à 4.

## Patentansprüche

1. Verfahren (400) zur automatischen Kontrolle einer textilen Geometrie einer Verstärkung (300) aus Verbundmaterial, die eine Vielzahl von textilen Mustern (3021) umfasst, wobei jedes textile Muster (3021) eine Vielzahl von Verstärkungsfasern (3002) umfasst, die gemäß einer textilen Topologie (302) angeordnet sind, wobei das Verfahren (400) einen Schritt zum Erfassen eines dreidimensionalen Bildes (301) der Verstärkung (300) aus Verbundmaterial (101) und die folgenden Schritte umfasst:
- Rekonstruktion der textilen Geometrie der Verstärkung (300) aus Verbundmaterial, eine Suche für jedes textile Muster (3021) der Verstärkung (300) aus Verbundmaterial umfassend, mithilfe eines künstlichen neuronalen Netzes, das unter Aufsicht anhand einer Trainingsdatenbank trainiert wurde, um das gegebene textile Muster in einem dreidimensionalen Bild einer Verstärkung aus Verbundmaterial des im erfassten (102) dreidimensionalen Bild (301) gegebenen textilen Musters (3021) zu erkennen, wobei die Trainingsdatenbank für jedes Trainingsverbundmaterial aus einer Vielzahl von Trainingsverbundmaterialien ein dreidimensionales Bild (301) der Verstärkung (300) des Trainingsverbundmaterials und für jedes zu erkennende textile Muster (3021) die textile Topologie (302) des textilen Musters (3021) und die Position des textilen Musters (3021) im dreidimensionalen Bild (301) umfasst und die Suche es ermöglicht, eine Anzahl von Erkennungen jedes textilen Musters (3021), die textile Topologie und eine Position jeder Erkennung in der Verstärkung (300) aus Verbundmaterial zu erhalten,
- Vergleich (401) zwischen der Rekonstruktion der textilen Geometrie der Verstärkung aus Verbundmaterial (300) und einer theoretischen textilen Geometrie.

2. Verfahren (400) nach Anspruch 1, **dadurch gekennzeichnet, dass** das künstliche neuronale Netz ein mehrschichtiges Perzeptron oder ein gefaltetes künstliches neuronales Netz ist.

3. Verfahren (400) nach einem der vorstehenden Ansprüche, **dadurch gekennzeichnet, dass** das dreidimensionale Bild (301) mittels Röntgentomographie oder mittels Transmissionselektronenmikroskop erfasst wird.

4. Verfahren (400) nach einem der vorstehenden Ansprüche, **dadurch gekennzeichnet, dass** die textile Topologie (302) jedes zu erfassenden textilen Musters (3021) manuell, mithilfe von Algorithmen der mathematischen Morphologie, eines künstlichen neuronalen Netzes oder einer speziellen Software ermittelt wird.

5. Rechner, der zur Durchführung der Verfahrensschritte (400) des Kontrollverfahrens (400) nach einem der vorstehenden Ansprüche konfiguriert ist.

6. Computerprogrammprodukt, das Anweisungen umfasst, die, wenn das Programm von einem Computer ausgeführt wird, diesen veranlassen, die Schritte des Kontrollverfahrens (400) nach einem der Ansprüche 1 bis 4 auszuführen.

7. Computerlesbares Aufzeichnungsmedium, das Anweisungen umfasst, die, wenn sie von einem Computer ausgeführt werden, diesen veranlassen, die Schritte des Kontrollverfahrens (400) nach einem der Ansprüche 1 bis 4 auszuführen.

## Claims

1. A method (400) for automatically checking the textile geometry of a composite material reinforcement (300) comprising a plurality of textile patterns (3021), each textile pattern (3021) comprising a plurality of reinforcement yarns (3002) arranged according to a textile topology (302), the method (400) comprising a step of acquiring a three-dimensional image (301) of the composite material reinforcement (300) and the following steps:
- reconstructing the textile geometry of the composite material reinforcement (300), comprising searching for each textile pattern (3021) of the composite material reinforcement (300), using an artificial neural network trained in a supervised manner on a training database to detect the given textile pattern in a three-dimensional image of a composite material reinforcement within the acquired three-dimensional image (301), wherein the training database comprises, for each training composite material from a plurality of training composite materials, a three-dimensional image (301) of the reinforcement (300) of the training composite material, and, for each textile pattern (3021) to be detected, the textile topology (302) of the textile pattern (3021) and the location of the textile pattern (3021) in the three-dimensional image (301), said search making it possible to obtain a number of detections of each textile pattern (3021), the textile topology, and a location of each detection within the composite material reinforcement (300),
- Comparing (401) the reconstruction of the textile geometry of the reinforcement (300) of composite material with a theoretical textile geometry.

2. The method (100) according to claim 1, **characterised in that** the artificial neural network is a multilayer perceptron or a convolutional artificial neural network.

3. The method (400) according to any of the preceding claims, **characterised in that** the three-dimensional image (301) is acquired by X-ray tomography or by transmission electron microscope.

4. The method (400) according to any of the preceding claims, **characterized in that** the textile topology (302) of each textile pattern (3021) to be detected is obtained manually, using mathematical morphology algorithms, an artificial neural network, or dedicated software.

5. A calculator configured to implement the steps of the inspection method (400) according to any of claims 1 to 4.

6. A computer program product comprising instructions which, when the program is executed by a computer, cause the same to implement the steps of the inspection method (400) according to any of claims 1 to 4.

7. A computer-readable recording medium comprising instructions which, when executed by a computer, cause the same to implement the steps of the inspection method (400) according to any of claims 1 to 4.
